# EUROPEAN PATENT APPLICATION

(11) **EP 4 707 559 A1**
(43) Date of publication of application: **11.03.2026**
(21) Application number: 25195753.6
(22) Date of filing: 13.08.2025
(51) Int. Cl.: F02C 6/08, F01D 21/00, F01D 25/12, F02C 7/18

(54) **SUCTION ENABLED POST SHUTDOWN COMBUSTOR COOLING AND VENTILATION**

(30) Priority: 29.08.2024 US 202418818828
(71) Applicant: RTX Corporation, Farmington, CT 06032 (US)
(72) Inventor: Yazici, Murat, Glastonbury, 06033 (US); Morton, Jeffrey T., Glastonbury, 06033 (US); Giannakopoulos, Konstantinos P., Middletown, 06457 (US)
(74) Representative: Schmitt-Nilson Schraud Waibel Wohlfrom Patentanwälte Partnerschaft mbB

(57) **Abstract**

A post shutdown combustor cooling system (10) including a pump (34) with a suction line (36) coupled with bleed ports (38); a bleed port line (40) coupled with the suction line; a pump suction valve (42) positioned in the suction line upstream of the pump; a bleed valve (44) positioned in the bleed port line; a pump discharge line (48) coupled with the pump, a core compartment supply line (56) coupled with a turbine cooling air port (58), a core compartment inlet (64) located within a core compartment (28) coupled with the core compartment, the core compartment supply line having a core compartment supply valve (70); a turbine cooling air supply line (60) coupled to the core compartment supply line and the high pressure turbine cooling air port, the turbine cooling air supply line comprising a turbine cooling air valve (68); and an engine core flow path (30) coupled with the bleed ports and turbine cooling air port.

## Description

The present disclosure is directed to the improved suction enabled post shutdown combustor cooling and ventilation system.

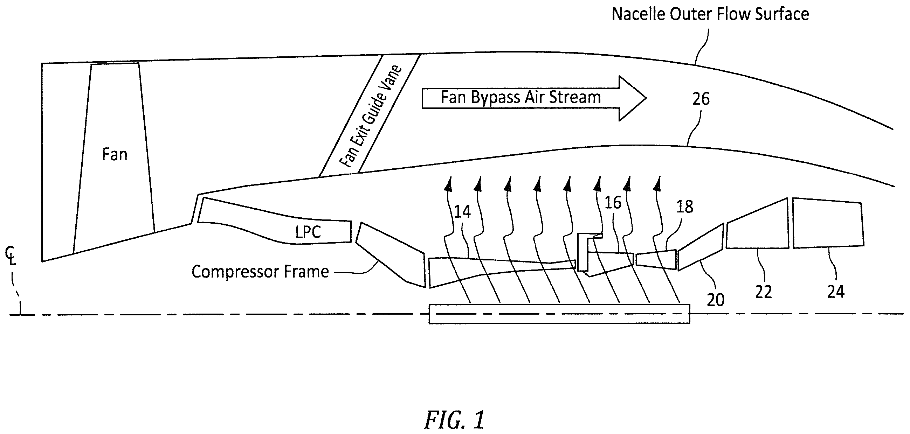

During normal operations, temperatures of gas turbine engine components are maintained within allowable limits by a plurality of cooling processes that transfer heat from the components to one or more heat sinks. When the engine is shutdown, most cooling systems no longer operate. As seen in Fig. 1, residual heat in certain engine components can be transferred (i.e.; "soakback") from the bore area, gas path, and cases and subsequently increase the temperature of other engine components beyond allowable limits.

A particular concern is the formation of carbon (or "coke") deposits in fuel carrying components including fuel nozzles when a hydrocarbon fuel (liquid or gas) is exposed to high temperatures in the presence of oxygen.

Coking can occur in fuel nozzles, fuel tubes, oil tubes, and drain tubes. Coking in the fuel nozzle can cause costly outcomes such as engine start issues, inefficient consumption and non-uniform combustion leading to accelerated part distress and engine in-flight shutdowns.

In accordance with the present disclosure, there is provided a suction enabled post shutdown combustor cooling and ventilation system comprising a pump fluidly coupled with a suction line, wherein the suction line is fluidly coupled with bleed ports proximate a high pressure compressor; a bleed port line fluidly coupled with the suction line proximate the bleed ports and upstream of the pump; a pump suction valve positioned in the suction line upstream of the pump; a bleed valve positioned in the bleed port line upstream of the pump suction valve; a pump discharge line fluidly coupled with the pump, an outlet fluidly coupled with the pump discharge line; and an engine core flow path fluidly coupled with the bleed ports.

Particular embodiments further may include at least one, or a plurality of, the following optional features, alone or in combination with each other:

A further embodiment of any of the foregoing embodiments may additionally and/or alternatively include the suction enabled post shutdown combustor cooling and ventilation system further comprising a core compartment supply line fluidly coupled with a high pressure turbine cooling air port, the core compartment supply line comprising a core compartment inlet located within a core compartment and fluidly coupled with the core compartment, the core compartment supply line comprising a core compartment supply valve located in the core compartment supply line upstream of the high pressure turbine cooling air port; a turbine cooling air supply line fluidly coupled to the core compartment supply line and the high pressure turbine cooling air port, the turbine cooling air supply line comprising a turbine cooling air valve.

A further embodiment of any of the foregoing embodiments may additionally and/or alternatively include the bleed valve and the turbine cooling air valve are configured as closed responsive to an engine shutdown condition; and the pump suction valve and the core compartment supply valve are configured as opened responsive to the engine shutdown condition.

A further embodiment of any of the foregoing embodiments may additionally and/or alternatively include the suction enabled post shutdown combustor cooling and ventilation system further comprising a blower fluidly coupled with the core compartment supply line.

A further embodiment of any of the foregoing embodiments may additionally and/or alternatively include the bleed valve and the turbine cooling air valve are configured as opened responsive to an engine operating condition; and the pump suction valve and the core compartment supply valve are configured as closed responsive to the engine operation condition.

A further embodiment of any of the foregoing embodiments may additionally and/or alternatively include the outlet is fluidly coupled with a fan bypass duct and/or the outlet is fluidly coupled with an air dump section.

A further embodiment of any of the foregoing embodiments may additionally and/or alternatively include the engine core flow path is in fluid communication between the high pressure compressor, the combustor and the high pressure turbine.

In accordance with the present disclosure, there is provided a gas turbine engine having a suction enabled post shutdown combustor cooling and ventilation system comprising a gas turbine engine core flow path extending through a high pressure compressor, a combustor and a high pressure turbine, the high pressure turbine comprising high pressure turbine cooling air ports; a pump fluidly coupled with a suction line, wherein the suction line is fluidly coupled with the bleed ports; a high pressure bleed port line fluidly coupled with the suction line proximate the bleed ports and upstream of the pump; a pump suction valve positioned in the suction line upstream of the pump; a bleed valve positioned in the bleed port line upstream of the pump suction valve; a pump discharge line fluidly coupled with the pump, an outlet fluidly coupled with the pump discharge line; a core compartment supply line fluidly coupled with the high pressure turbine cooling air ports, the core compartment supply line comprising a core compartment inlet located within a core compartment and fluidly coupled with the core compartment, the core compartment supply line comprising a core compartment supply valve located in the core compartment supply line upstream of the high pressure turbine cooling air ports; a turbine cooling air supply line fluidly coupled to the core compartment supply line and the high pressure turbine cooling air ports, the turbine cooling air supply line comprising a turbine cooling air valve; and the gas turbine engine core flow path fluidly coupled with the bleed ports and the high pressure turbine cooling air ports.

Particular embodiments further may include at least one, or a plurality of, the following optional features, alone or in combination with each other:

A further embodiment of any of the foregoing embodiments may additionally and/or alternatively include the bleed valve and the turbine cooling air valve are configured as closed responsive to an engine shutdown condition; and the pump suction valve and the core compartment supply valve are configured as opened responsive to the engine shutdown condition.

A further embodiment of any of the foregoing embodiments may additionally and/or alternatively include the bleed valve and the turbine cooling air valve are configured as opened responsive to an engine operating condition; and the pump suction valve and the core compartment supply valve are configured as closed responsive to the engine operation condition.

A further embodiment of any of the foregoing embodiments may additionally and/or alternatively include the outlet is fluidly coupled with a fan bypass duct.

A further embodiment of any of the foregoing embodiments may additionally and/or alternatively include multiple sets of core compartment air supply lines are configured in an array about a centerline of the gas turbine engine; and multiple sets of suction lines and pumps are plumbed in the gas turbine engine.

A further embodiment of any of the foregoing embodiments may additionally and/or alternatively include the gas turbine engine having a suction enabled post shutdown combustor cooling and ventilation system further comprising a blower fluidly coupled with the core compartment supply line.

In accordance with the present disclosure, there is provided a process for post shutdown combustor cooling and ventilation in a gas turbine engine having a suction enabled post shutdown system comprising a gas turbine engine core flow path extending through a high pressure compressor, a combustor and a high pressure turbine, the high pressure turbine comprising high pressure turbine cooling air ports; fluidly coupling a pump with a suction line; fluidly coupling the suction line with bleed ports; fluidly coupling a bleed port line with the suction line proximate the bleed ports and upstream of the pump; positioning a pump suction valve in the suction line upstream of the pump; positioning a bleed valve in the bleed port line upstream of the pump suction valve; fluidly coupling a pump discharge line with the pump, fluidly coupling an outlet with the pump discharge line; fluidly coupling a core compartment supply line with the high pressure turbine cooling air ports, the core compartment supply line comprising a core compartment inlet located within a core compartment; and fluidly coupling the core compartment inlet with the core compartment, the core compartment supply line comprising a core compartment supply valve located in the core compartment supply line upstream of the high pressure turbine cooling air ports; fluidly coupling a turbine cooling air supply line to the core compartment supply line and the high pressure turbine cooling air ports, the turbine cooling air supply line comprising a turbine cooling air valve; and fluidly coupling the gas turbine engine core flow path with the bleed ports and the high pressure turbine cooling air ports.

Particular embodiments further may include at least one, or a plurality of, the following optional features, alone or in combination with each other:

A further embodiment of any of the foregoing embodiments may additionally and/or alternatively include the process further comprising closing the bleed valve and the turbine cooling air valve responsive to an engine shutdown condition; and opening the pump suction valve and the core compartment supply valve responsive to the engine shutdown condition.

A further embodiment of any of the foregoing embodiments may additionally and/or alternatively include the process further comprising opening the bleed valve and the turbine cooling air valve responsive to an engine operating condition; and closing the pump suction valve and the core compartment supply valve responsive to the engine operation condition.

A further embodiment of any of the foregoing embodiments may additionally and/or alternatively include the process further comprising fluidly coupling a blower with the core compartment supply line.

A further embodiment of any of the foregoing embodiments may additionally and/or alternatively include the process further comprising fluidly coupling the outlet with a fan bypass duct.

A further embodiment of any of the foregoing embodiments may additionally and/or alternatively include the process further comprising fluidly coupling the outlet with an air dump section.

A further embodiment of any of the foregoing embodiments may additionally and/or alternatively include the process further comprising removing core compartment air from the core compartment near upper portions of the gas turbine engine responsive to hot air rising upward into the upper portions during a post shutdown condition.

The disclosed system cools the air in the combustor cavity by drawing in air from the core flow path and promoting airflow through the combustor from aft to forward so that hot air can be dumped to the fan bypass air stream. The invention reduces/removes the coking risk at the fuel nozzles, and it also helps with core ventilation to reduce coking risk in the fuel manifolds and other fuel & oil tubes post engine shutdown which helps other hardware & components in the core area

Other details of the suction enabled post shutdown combustor cooling and ventilation system are set forth in the following detailed description and the accompanying drawings wherein like reference numerals depict like elements.
Fig. 1 is a cross-sectional view of a schematic representation of an exemplary gas turbine engine post-shutdown.
Fig. 2 is a cross-sectional view of a schematic representation of an exemplary gas turbine engine with an exemplary suction enabled post shutdown combustor cooling and ventilation system.

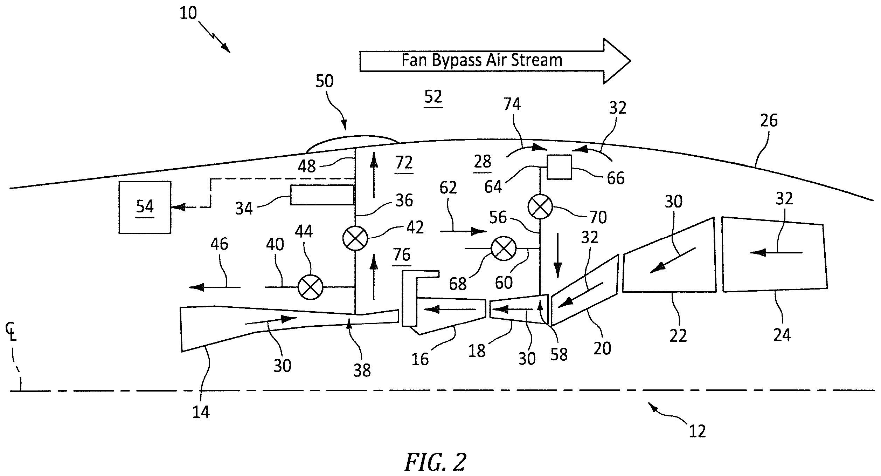

Referring now to Fig. 2, the exemplary suction enabled post shutdown combustor cooling and ventilation system 10 is shown. The suction enabled post shutdown combustor cooling and ventilation system or simply system 10 is shown incorporated within the gas turbine engine 12 having centerline CL. The gas turbine engine 12 includes sections listed from forward toward aft, such as, a high pressure compressor (HPC) 14, combustor (COMB) 16, high pressure turbine (HPT) 18, turbine frame 20, low pressure turbine (LPT) 22, and exhaust frame 24.

The nacelle inner flow surface 26 is shown bounding a core compartment 28. The core compartment 28 encloses the above listed gas turbine engine 12 sections. A core flow path 30 (shown as arrows) traverses through the engine sections 14, 16, 18, 20, 22, 24 and represents a path that air can travel to provide cooling air 32 for use with the system 10.

The system 10 can include a pump 34, such as a vacuum pump fluidly coupled with a suction line 36. The suction line 36 is fluidly coupled with bleed ports 38 of the high pressure compressor 14. Bleed ports 38 may alternatively or additionally be located in the combustor 16, low pressure compressor bleed, high pressure compressor bleed compressor frame and/or intermediate 2.5 bleed locations. A high pressure bleed port line, or simply bleed port line 40 is fluidly coupled with the suction line 36 proximate the bleed ports 38 and upstream of the pump 34. The high pressure bleed port line 40 is employed during operation of the engine 12.

A pump suction valve 42 is positioned in the suction line 36 upstream of the pump 34. The pump suction valve 42 can be operated to control the flow of cooling air 32 being pumped/drawn in by the pump 34 through the suction line 36. The pump suction valve 42 can be closed during normal engine 12 operation and shut off flow of air through the suction line 36 and shut off flow through the pump 34. During operation of the system 10, the pump suction valve 42 can be opened and allow for cooling air 32 to flow through the suction line 36 to the pump 34.

A high pressure bleed valve 44 can be positioned in the high pressure bleed port line 40 upstream of the pump suction valve 42. The high pressure bleed valve 44 can be operated to control the flow of air through the bleed ports 38 to the high pressure bleed port line 40. The high pressure bleed valve 44 can be open during normal engine 12 operation allowing bleed air 46 to flow through the high pressure bleed port line 40 from the bleed ports 38. The high pressure bleed valve 44 can be closed during operation of the system 10, to allow for cooling air 32 to be pumped/drawn into the suction line 36 from the bleed ports 38.

The pump 34 can be fluidly coupled with a pump discharge line 48. The pump discharge line 48 can be fluidly coupled with an outlet 50 fluidly coupled with the fan bypass duct 52. The outlet 50 can be configured as a nacelle air scoop formed in the nacelle inner flow surface 26. In an alternative embodiment, the pump discharge line 48 can also be fluidly coupled with an air dump section 54 including at least one of a diffuser case, a high pressure compressor case and/or a 2.5 compartment to allow for the cooling air 32 to be discharged from the pump 34.

The system 10 can include a core compartment supply line 56 fluidly coupled with high pressure turbine cooling air ports 58. The high pressure turbine cooling air ports 58 are fluidly coupled with a turbine cooling air supply line 60. The turbine cooling air supply line 60 is also fluidly coupled with the core compartment supply line 56. The turbine cooling air supply line 60 is configured to supply turbine cooling air 62 to the high pressure turbine cooling air ports 58 during engine 12 operation.

The core compartment supply line 56 includes a core compartment inlet 64 located within the core compartment 28. The core compartment inlet 64 is fluidly coupled with the core compartment 28 and configured to pull cooling air 32 from the core compartment 28 during system 10 operation.

In an alternative embodiment, a blower 66 can be fluidly coupled with the core compartment supply line 56. The blower 66 can assist the pump 34 with circulating cooling air 32 from the core compartment 28 into the core compartment supply line 56 and through the high pressure turbine cooling air ports 58.

A turbine cooling air valve 68 can be located in the turbine cooling air line 60. The turbine cooling air valve 68 can be in the open position during normal engine 12 operation to supply turbine cooling air 62 to the ports 58. The turbine cooling air valve 68 can be in the closed position during system 10 operation, to allow for cooling air 32 to flow through the core compartment supply line 56 and through the high pressure turbine cooling air ports 58.

A core compartment supply valve 70 can be located in the core compartment supply line 56 upstream of the ports 58. The core compartment supply valve 70 can be closed during normal engine 12 operation. The core compartment supply valve 70 can be opened during system 10 operation to allow for cooling air 32 to flow into the core compartment inlet 64 through the core compartment supply line 56 and into the ports 58 ultimately flowing to the pump 34.

The pump 34 and the blower 66 can be powered from available power during the engine shutdown condition, such as battery or ground supplied power.

The system 10 can operate during gas turbine engine 12 shutdown conditions. The high pressure bleed valve 44 and the turbine cooling air valve 68 can be closed. The pump suction valve 42 and the core compartment supply valve 70 can be opened. The pump 34 can be activated and draw a suction upstream through the suction line 36 as well as through the bleed ports 38. The suction at the bleed ports 38 can influence the air along the core flow path 30 and draw a portion of the air within the core flow path 30 into the bleed ports 38 and toward the pump 34. Additionally, the suction from the pump 34 can influence the cooing air 32 within the core compartment 28 and draw the cooling air 32 from the core compartment 28 into the core compartment inlet 64 through the core compartment supply line 56 through the turbine cooling air ports 58 into the core flow path 30 through the combustor (combustor cavity) 16 and through the bleed ports 38 into the pump 34 and ultimately discharge out through the outlet 50.

The system 10 can operate to draw cooling air 32 through the engine 12 to prevent engine components vulnerable to coking. The system 10 can be configured for suppressing a coking point temperature, such as about 250 degrees Fahrenheit for GP8 fuel.

It is contemplated that the system 10 can include multiple sets of core compartment air supply lines 56 in an array about the centerline CL of the engine 12. There can also be multiple sets of suction lines 36 and pumps 34 plumbed in the engine 12, placed strategically to move the optimum cooling air 32 through the combustor section 16. In an exemplary embodiment, the system 10 can be configured to remove the cooling air 32 from the core compartment 28 in the array near upper portions 72 (relative to gravity) such as top dead center, of the engine 12, responsive to the hot air during the soak back tending to rise upward into those upper portions 72.

It is contemplated that the system 10 can suck cooling air 32 from the core flow path 30(follow the arrows) with existing tubes and HPC discharge bleed ports 38 via the system 10. It is desirable to preferentially select the cooling air 32 from aft of the HPC bleed ports 38, a path for core compartment air 74 to enter the flow path through HPT TCA ports 58 is opened. This encourages air 32 to move from aft of the combustor 16 (from turbine gas path cavity) to in front of the combustor 16 (to compressor gas path cavity). This flow of air 32 through the combustor 16 allows the heat released from the bores of high spool disks to escape the engine cases, and more specifically the combustor 16 rather than soaking into fuel system components 76 including fuel nozzles and manifolds. The warmed air 32 is sucked from the combustor 16 cavity with the vacuum pump 34 and dumped to the fan bypass duct 52 through the outlet 50 (a nacelle scoop or other fluid connection 54). The core compartment air 74 is pumped into the system 10 from the core compartment 28 providing the benefit of venting the core compartment 28. The valves 42 and 68 can be integrated together with other engine 12 secondary flow valves.

A technical advantage of the disclosed suction enabled post shutdown combustor cooling and ventilation system includes a system configured for engine post shutdown fuel nozzle, fuel tubes, oil tubes, and drain tubes coking prevention.

Another technical advantage of the disclosed suction enabled post shutdown combustor cooling and ventilation system includes a system configured to interrupt post shutdown convective core flow that causes coking.

Another technical advantage of the disclosed suction enabled post shutdown combustor cooling and ventilation system includes a system that is configured to ventilate the core flow path during shutdown conditions.

Another technical advantage of the disclosed suction enabled post shutdown combustor cooling and ventilation system includes preventing costly component failure modes resulting from coking.

Another technical advantage of the disclosed suction enabled post shutdown combustor cooling and ventilation system includes a system that removes/reduces the risk of coking at the combustor section.

There has been provided a suction enabled post shutdown combustor cooling and ventilation system. While the suction enabled post shutdown combustor cooling and ventilation system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A suction enabled post shutdown combustor cooling and ventilation system comprising:
a pump fluidly coupled with a suction line, wherein the suction line is fluidly coupled with bleed ports proximate a high pressure compressor;
a bleed port line fluidly coupled with the suction line proximate the bleed ports and upstream of the pump;
a pump suction valve positioned in the suction line upstream of the pump;
a bleed valve positioned in the bleed port line upstream of the pump suction valve;
a pump discharge line fluidly coupled with the pump,
an outlet fluidly coupled with the pump discharge line; and
an engine core flow path fluidly coupled with the bleed ports.

2. The suction enabled post shutdown combustor cooling and ventilation system according to claim 1, further comprising:
a core compartment supply line fluidly coupled with a high pressure turbine cooling air port, the core compartment supply line comprising a core compartment inlet located within a core compartment and fluidly coupled with the core compartment, the core compartment supply line comprising a core compartment supply valve located in the core compartment supply line upstream of the high pressure turbine cooling air port;
a turbine cooling air supply line fluidly coupled to the core compartment supply line and the high pressure turbine cooling air port, the turbine cooling air supply line comprising a turbine cooling air valve.

3. The suction enabled post shutdown combustor cooling and ventilation system according to claim 2, wherein the bleed valve and the turbine cooling air valve are configured as closed responsive to an engine shutdown condition; and
the pump suction valve and the core compartment supply valve are configured as opened responsive to the engine shutdown condition.

4. The suction enabled post shutdown combustor cooling and ventilation system according to claim 2 or 3, further comprising:
a blower fluidly coupled with the core compartment supply line.

5. The suction enabled post shutdown combustor cooling and ventilation system according to any of claims 2 to 4, wherein the bleed valve and the turbine cooling air valve are configured as opened responsive to an engine operating condition; and the pump suction valve and the core compartment supply valve are configured as closed responsive to the engine operation condition.

6. The suction enabled post shutdown combustor cooling and ventilation system according to any of claims 1 to 5, wherein the outlet is fluidly coupled with a fan bypass duct and/or the outlet is fluidly coupled with an air dump section.

7. The suction enabled post shutdown combustor cooling and ventilation system according to any of claims 1 to 6, wherein the engine core flow path is in fluid communication between the high pressure compressor, the combustor and the high pressure turbine.

8. A gas turbine engine having the suction enabled post shutdown combustor cooling and ventilation system according to any of claims 1 to 7, comprising:
a gas turbine engine core flow path extending through a high pressure compressor, a combustor and a high pressure turbine, the high pressure turbine comprising high pressure turbine cooling air ports;
the gas turbine engine core flow path fluidly coupled with the bleed ports and the high pressure turbine cooling air ports.

9. The gas turbine engine having a suction enabled post shutdown combustor cooling and ventilation system according to claim 8, wherein multiple sets of core compartment air supply lines are configured in an array about a centerline of the gas turbine engine; and
multiple sets of suction lines and pumps are plumbed in the gas turbine engine.

10. A process for post shutdown combustor cooling and ventilation in a gas turbine engine having a suction enabled post shutdown system comprising:
a gas turbine engine core flow path extending through a high pressure compressor, a combustor and a high pressure turbine, the high pressure turbine comprising high pressure turbine cooling air ports;
fluidly coupling a pump with a suction line; fluidly coupling the suction line with bleed ports;
fluidly coupling a bleed port line with the suction line proximate the bleed ports and upstream of the pump;
positioning a pump suction valve in the suction line upstream of the pump;
positioning a bleed valve in the bleed port line upstream of the pump suction valve;
fluidly coupling a pump discharge line with the pump,
fluidly coupling an outlet with the pump discharge line;
fluidly coupling a core compartment supply line with the high pressure turbine cooling air ports, the core compartment supply line comprising a core compartment inlet located within a core compartment; and fluidly coupling the core compartment inlet with the core compartment, the core compartment supply line comprising a core compartment supply valve located in the core compartment supply line upstream of the high pressure turbine cooling air ports;
fluidly coupling a turbine cooling air supply line to the core compartment supply line and the high pressure turbine cooling air ports, the turbine cooling air supply line comprising a turbine cooling air valve; and
fluidly coupling the gas turbine engine core flow path with the bleed ports and the high pressure turbine cooling air ports.

11. The process according to claim 10, further comprising:
closing the bleed valve and the turbine cooling air valve responsive to an engine shutdown condition; and
opening the pump suction valve and the core compartment supply valve responsive to the engine shutdown condition.

12. The process according to claim 10 or 11, further comprising:
opening the bleed valve and the turbine cooling air valve responsive to an engine operating condition; and
closing the pump suction valve and the core compartment supply valve responsive to the engine operation condition.

13. The process according to any of claims 10 to 12, further comprising:
fluidly coupling a blower with the core compartment supply line.

14. The process according to any of claims 10 to 13, further comprising:
fluidly coupling the outlet with a fan bypass duct.

15. The process according to any of claims 10 to 14, further comprising:
fluidly coupling the outlet with an air dump section; and/or
further comprising:
removing core compartment air from the core compartment near upper portions of the gas turbine engine responsive to hot air rising upward into the upper portions during a post shutdown condition.
